(19) Europäisches Patentamt
European Patent Office
Office européen des brevets

(11) **EP 4 768 312 A1**

(12) **EUROPEAN PATENT APPLICATION**

(43) Date of publication:
**01.07.2026 Bulletin 2026/27**

(21) Application number: **25226002.1**

(22) Date of filing: **19.12.2025**

(51) International Patent Classification (IPC):
**B60L 15/20** (2006.01)    **B60W 30/182** (2020.01)

(52) Cooperative Patent Classification (CPC):
**B60L 15/20;** B60L 2240/28; B60L 2240/421;
B60L 2240/423; B60L 2250/10; B60L 2250/16;
B60L 2250/24; B60L 2260/26; B60L 2270/42

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.12.2024 JP 2024231822**

(71) Applicant: **Toyota Jidosha Kabushiki Kaisha
Toyota-shi, Aichi-ken 471-8571 (JP)**

(72) Inventor: **HAREYAMA, Yohei
TOYOTA-SHI, AICHI-KEN, 471-8571 (JP)**

(74) Representative: **Cabinet Beau de Loménie
103, rue de Grenelle / CS 90800
75340 Paris Cedex 07 (FR)**

(54) **BATTERY ELECTRIC VEHICLE**

(57)    A battery electric vehicle (10) includes one or more processors (101). The one or more processors (101) are configured to acquire information needed to simulate a driving environment of a target virtual mobility (30) from a medium that is present outside the battery electric vehicle (10), and simulate the driving environment of the target virtual mobility (30).

FIG. 5

[SIMULATION MODE]
VIRTUAL MOBILITY 30 IS SIMULATED

**Description**

BACKGROUND OF THE INVENTION

1. Field of the Invention

The present disclosure relates to a battery electric vehicle that uses an electric motor as a motive power device for traveling.

2. Description of Related Art

A vehicle technology that simulates a virtual mobility is known. For example, Japanese Patent No. 7424464 (JP 7424464 B) discloses a technology that simulates driving characteristics and sounds of a manual transmission vehicle. This technology allows a driver to experience realistic sensations as if driving a manual transmission vehicle.

SUMMARY OF THE INVENTION

A technology that simulates a driving environment of a virtual mobility in a battery electric vehicle is known. There is room for improvement in a method of providing a battery electric vehicle with information needed to simulate a driving environment of a virtual mobility.

The present disclosure provides a technology for starting calculations needed to simulate a driving environment of a virtual mobility at an early timing.

The present disclosure relates to a battery electric vehicle that uses an electric motor as a motive power device for traveling.
The battery electric vehicle includes one or more processors.
The one or more processors are configured to acquire information needed to simulate a driving environment of a target virtual mobility from a medium present outside the battery electric vehicle, and simulate the driving environment of the target virtual mobility.

In the configuration according to the present disclosure, the battery electric vehicle acquires the information needed to simulate the driving environment of the target virtual mobility from the medium that is present outside the battery electric vehicle. This allows early start of calculations needed to simulate the driving environment. As a result, the simulation of the driving environment starts smoothly.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual view showing a vehicle and a vehicle management system according to an embodiment;
FIG. 2 is a conceptual view for describing a "simulation mode" included in the vehicle management system according to the embodiment;
FIG. 3 is a block diagram showing an example of a functional configuration involved in generation and output of a simulated sound of a virtual mobility;
FIG. 4 is a block diagram showing another example of the functional configuration involved in generation and output of the simulated sound of the virtual mobility;
FIG. 5 is a schematic view showing how a simulation mode using a physical key is started;
FIG. 6 is a flowchart relating to a process of starting the simulation mode using the physical key;
FIG. 7 is a schematic view showing a relationship between a vehicle activation operation and the simulation mode;
FIG. 8 is a flowchart of a case where the simulation mode is started in conjunction with the vehicle activation operation;
FIG. 9 is a schematic view illustrating designation operations;
FIG. 10 is a schematic view showing a case where a user has a first physical key and a second physical key;
FIG. 11 is a flowchart showing a process of switching a target virtual mobility;
FIG. 12 is a block diagram showing an example of configurations of the vehicle and the physical key;
FIG. 13 is a block diagram showing a first example of a configuration of a motive power control system of the battery electric vehicle according to the embodiment;
FIG. 14 is a view showing an MT vehicle model included in a manual-mode torque calculation unit;
FIG. 15 is a view showing a torque characteristic of an electric motor realized by motor control using the MT vehicle model as compared with a torque characteristic of an electric motor realized by ordinary motor control in a battery electric vehicle; and
FIG. 16 is a block diagram showing a second example of the configuration of the motive power control system of the battery electric vehicle according to the embodiment.

DETAILED DESCRIPTION OF EMBODIMENTS

An embodiment of the present disclosure will be described with reference to the accompanying drawings.

1. Vehicle and Vehicle Management System

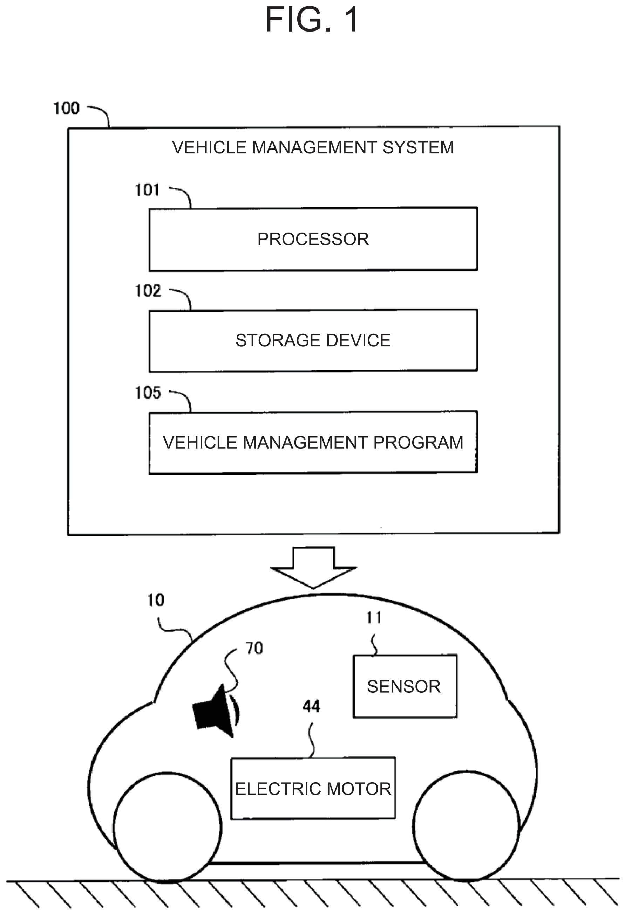

FIG. 1 is a conceptual view showing a vehicle 10 and a vehicle management system 100 according to the embodiment. For example, the vehicle 10 is a battery electric vehicle that uses an electric motor 44 as a motive power device for traveling. Examples of the electric motor 44 include a brushless DC motor and a three-phase alternating-current synchronous motor. As another example, the vehicle 10 may be an engine vehicle that uses an internal combustion engine as a motive power device for traveling.

The vehicle 10 includes various sensors 11. The various sensors 11 detect a driving state of the vehicle 10. Examples of the various sensors 11 include an accelerator position sensor, a brake position sensor, a steering angle sensor, a steering torque sensor, a wheel speed sensor, an acceleration sensor, a rotation speed sensor, a position sensor, and a recognition sensor. The accelerator position sensor detects an amount of operation of an accelerator pedal. The brake position sensor detects an amount of operation of a brake pedal. The steering angle sensor detects a steering angle of a steering wheel. The steering torque sensor detects steering torque of the steering wheel. The wheel speed sensor detects a rotation speed of a wheel of the vehicle 10. The acceleration sensor detects a lateral acceleration rate and a front-rear acceleration rate of the vehicle 10. The rotation speed sensor detects a rotation speed of the electric motor 44. The position sensor detects a position of the vehicle 10. One example of the position sensor is a global navigation satellite system (GNSS) sensor. The recognition sensor is a sensor for recognizing (detecting) conditions around the vehicle 10. Examples of the recognition sensor include a camera, a light detection and ranging (lidar), and a radar.

Further, the vehicle 10 is equipped with one or more speakers 70. For example, the speaker 70 is an inside speaker that outputs sound inside a vehicle cabin of the vehicle 10. As another example, the speaker 70 may be an outside speaker that outputs sound to an outside of the vehicle 10. The vehicle 10 may include both the inside speaker and the outside speaker.

The vehicle management system 100 is applied to such a vehicle 10 to manage the vehicle 10. The entire vehicle management system 100 may be installed in the vehicle 10. As another example, at least part of the vehicle management system 100 may be included in a management server outside the vehicle 10. In that case, the vehicle management system 100 may remotely manage the vehicle 10. As yet another example, the vehicle management system 100 may be divided between the vehicle 10 and the management server.

By way of generalization, the vehicle management system 100 includes one or more processors 101 (hereinafter referred to simply as a "processor 101") and one or more storage devices 102 (hereinafter referred to simply as a "storage device 102"). The processor 101 executes various processes. Examples of the processor 101 include a general-purpose processor, an application-specific processor, a central processing unit (CPU), a graphics processing unit (GPU), an application-specific integrated circuit (ASIC), a field-programmable gate array (FPGA), an integrated circuit, a conventional circuit, and/or combinations of these. The processor 101 can be referred to also as "circuitry" or "processing circuitry." The circuitry is hardware programmed to realize described functions or hardware that executes functions. The storage device 102 stores (retains) various information. Examples of the storage device 102 include a volatile memory, a non-volatile memory, a hard disk drive (HDD), and a solid-state drive (SSD). The function of the vehicle management system 100 is realized through cooperation between the processor 101 and the storage device 102.

One or more vehicle management programs 105 (hereinafter referred to simply as a "vehicle management program 105") are computer programs that are executed by the processor 101. The function of the vehicle management system 100 may be realized through cooperation between the processor 101 executing the vehicle management programs 105 and the storage device 102. The vehicle management programs 105 are retained in the storage device 102. Alternatively, the vehicle management programs 105 may be recorded on a computer-readable recording medium.

2. Simulation Mode That Simulates Virtual Mobility

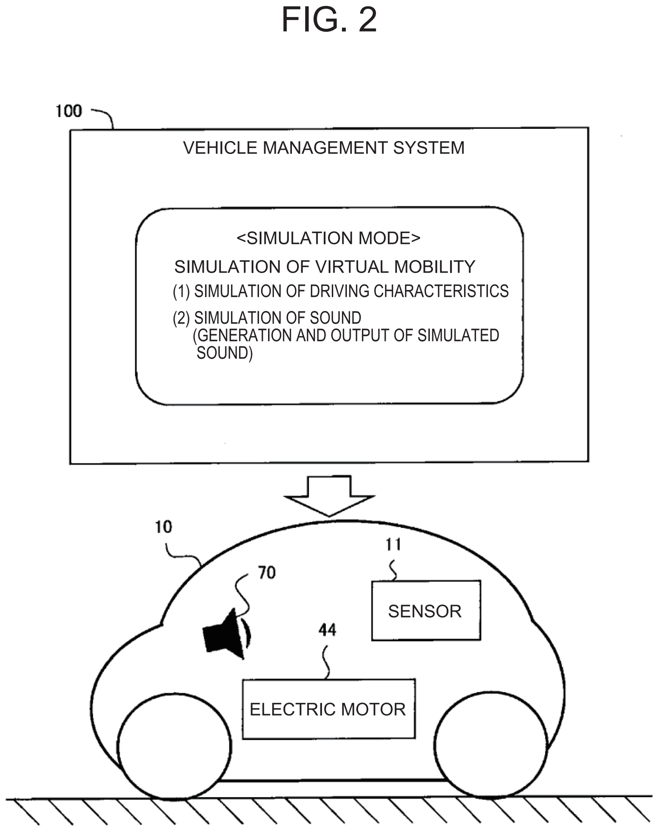

FIG. 2 is a conceptual view for describing a "simulation mode" included in the vehicle management system 100 according to the embodiment. The simulation mode is a mode in which a "virtual mobility" is simulated (reproduced) in the vehicle 10. For example, the virtual mobility to be simulated is a different type of vehicle from the vehicle 10. As another example, the virtual mobility to be simulated may be a train, an airplane, etc.

For example, when the vehicle 10 is a battery electric vehicle, the vehicle management system 100 may simulate (reproduce) a "driving characteristic" of another vehicle in the battery electric vehicle. Another vehicle (virtual mobility) to be simulated may be another battery electric vehicle or may be a manual transmission vehicle (MT vehicle). For example, the vehicle management system 100 may simulate (reproduce) a driving characteristic of the MT vehicle in the battery electric vehicle. Details of an "MT mode (manual mode)" in which a driving characteristic of the MT vehicle is simulated in the battery electric vehicle will be described later in Section 7. In any case, the vehicle management system 100 manages virtual mobility model data indicating a model of the virtual mobility, and reproduces a driving characteristic of the virtual mobility based on the virtual mobility model data. This allows the driver of the vehicle 10 to experience sensations as if driving the virtual mobility.

It is also possible to switch the virtual mobility to be simulated. Specifically, a plurality of types of virtual mobility model data relating to a plurality of types of virtual mobilities is prepared. A user of the vehicle 10 designates his or her favorite virtual mobility, and the vehicle management system 100 reproduces a driving characteristic by using virtual mobility data relating to the virtual mobility designated by the user. Thus, the driver of the vehicle 10 can experience sensations as if driving his or her favorite virtual mobility.

As another example, the vehicle management system 100 may simulate (reproduce) a "sound" of the virtual mobility in the vehicle 10. That is, the vehicle management system 100 may generate a simulated sound that simulates a sound of the virtual mobility and output the simulated sound via the speaker 70 of the vehicle 10. Typically, a sound to be simulated (reproduced) is a drive sound or a travel sound of the virtual mobility. The virtual mobility to be simulated is, for example, a vehicle. A vehicle to be simulated may be an engine vehicle or may be a battery electric vehicle. For example, when the vehicle 10 is a battery electric vehicle and the virtual mobility is an engine vehicle, the vehicle management system 100 simulates (reproduces) an engine sound of the engine vehicle in the battery electric vehicle. The virtual mobility to be simulated is not limited to a vehicle and may be a train, an airplane, etc., other than a vehicle.

When expressed in generalized terms, the driving characteristics and the sounds of the virtual mobility can be called an environment during driving of the virtual mobility. Therefore, the driving characteristics and the sounds of the virtual mobility are included in the concept of "driving environment" of the virtual mobility. That is, in the simulation mode, the vehicle management system 100 simulates the driving environment of the virtual mobility in the vehicle 10 based on the virtual mobility model data. When the vehicle management system 100 simulates the driving environment of the virtual mobility in the vehicle 10, as a result, the vehicle 10 also simulates the driving environment of a virtual mobility 30. Thus, "that the vehicle management system 100 simulates the driving environment of the virtual mobility in the vehicle 10" and "that the vehicle 10 simulates the driving environment of the virtual mobility" are equivalent.

In the following, generation and output of a simulated sound that simulates a sound of the virtual mobility will be described in more detail. In the following description, a pseudo-engine sound that simulates an engine sound of an engine vehicle will be considered as one example. However, the present disclosure is also applicable to other sounds as well. For generalization, "pseudo-engine sound" in the following description should be read as "simulated sound."

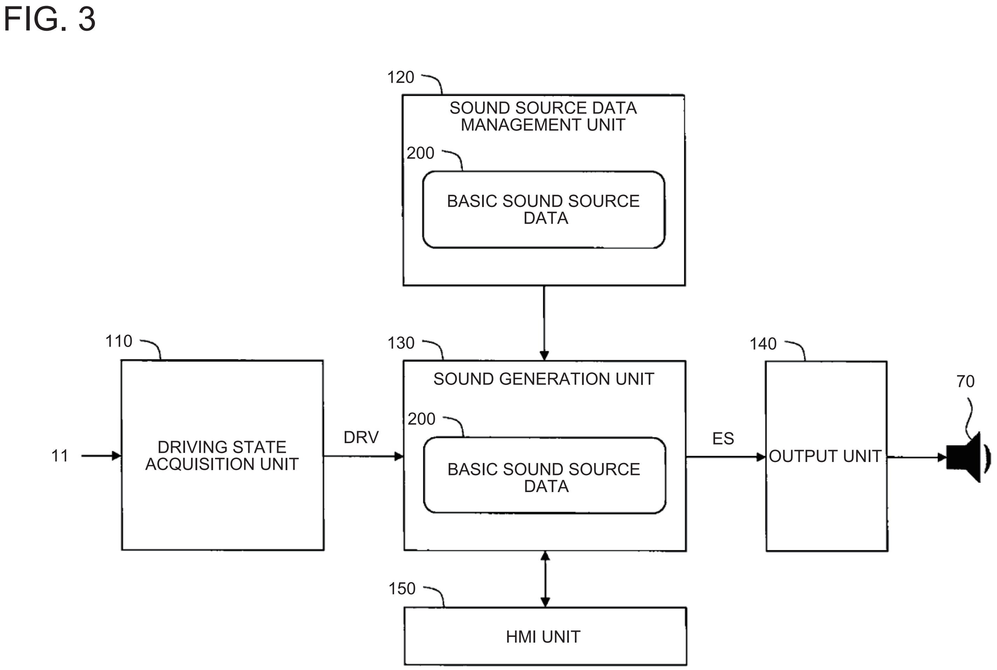

FIG. 3 is a block diagram showing an example of a functional configuration involved in generation and output of a simulated sound of the virtual mobility. The vehicle management system 100 includes, as functional blocks, a driving state acquisition unit 110, a sound source data management unit 120, a sound generation unit 130, and an output unit 140. These functional blocks may be realized, for example, through cooperation between the processor 101 executing the vehicle management programs 105 and the storage device 102.

The driving state acquisition unit 110 acquires driving state information DRV indicating a driving state of the vehicle 10. The driving state information DRV includes information about a driving operation performed by the driver, information about a travel state of the vehicle 10, information about conditions around the vehicle 10, etc. Typically, the driving state information DRV includes information detected by the sensors 11 installed in the vehicle 10. For example, the driving state information DRV includes an amount of operation of an accelerator pedal (accelerator operation amount), an amount of operation of a brake pedal (brake operation amount), a steering angle, a steering speed, steering torque, a wheel speed, a vehicle speed, a front-rear acceleration rate, a lateral acceleration rate, and a rotation speed of the electric motor 44. The driving state information DRV may include a position of the vehicle 10. The driving state information DRV may include the conditions around the vehicle 10 recognized (detected) by the recognition sensor.

In addition, the driving state information DRV includes a virtual engine rotation speed Ne. Here, it is assumed that the vehicle 10 uses a virtual engine as a motive power device for traveling. The virtual engine rotation speed Ne is a rotation speed of a virtual engine based on an assumption that the vehicle 10 is driven by the virtual engine. For example, the driving state acquisition unit 110 may calculate the virtual engine rotation speed Ne so as to increase as the wheel speed increases. When the vehicle 10 includes a manual mode (MT mode) to be described later, the driving state acquisition unit 110 may calculate the virtual engine rotation speed Ne in the manual mode based on the wheel speed, a total reduction ratio, and a slip ratio of a virtual clutch. Details of a method for calculating the virtual engine rotation speed Ne in the manual mode will be described later.

The sound source data management unit 120 stores and manages basic sound source data 200 that is used to generate a pseudo-engine sound. The sound source data management unit 120 is realized mainly by the one or more storage devices 102. Typically, the basic sound source data 200 includes a plurality of types of sound source data. These multiple types of sound source data include, for example, sound source data (for low revolutions per minute, for medium revolutions per minute, for high revolutions per minute) on sounds caused by engine combustion, sound source data (for low revolutions per minute, for medium revolutions per minute, for high revolutions per minute) on sounds caused by a drive system, such as gears, sound source data on noise sounds, and sound source data on event sounds (e.g.: a rasping sound, an engine stall sound). Each piece of sound source data is generated beforehand through simulation etc., based on an engine model and a vehicle model of an engine vehicle. Each piece of sound source data can be flexibly adjusted. That is, at least one of the sound pressure and the frequency of a sound represented by the sound source data can be flexibly adjusted.

The sound generation unit 130 (sound simulator) is a simulator that generates a pseudo-engine sound. The sound generation unit 130 acquires at least some pieces of the driving state information DRV from the driving state acquisition unit 110. In particular, the sound generation unit 130 acquires information on the virtual engine rotation speed Ne and the vehicle speed from the driving state acquisition unit 110. Further, the sound generation unit 130 retrieves the basic sound source data 200 from the sound source data management unit 120. Then, the sound generation unit 130 generates a pseudo-engine sound corresponding to the driving state (the virtual engine rotation speed Ne or the vehicle speed) of the vehicle 10 by combining one or more pieces of sound source data included in the basic sound source data 200. Engine sound data ES is data representing the generated pseudo-engine sound.

Generation of the pseudo-engine sound is not particularly limited in this embodiment. For example, the pseudo-engine sound may be generated by an engine sound simulator. A technique may be used in which a virtual engine rotation speed Ne vs. frequency map and a virtual engine torque vs. sound pressure map are available, and the frequency of the pseudo-engine sound is increased or decreased in proportion to the virtual engine rotation speed Ne, and the sound pressure thereof is increased or decreased in proportion to the virtual engine torque.

The output unit 140 receives the engine sound data ES generated by the sound generation unit 130. Then, the output unit 140 outputs the pseudo-engine sound through the speaker 70 based on the engine sound data ES. Thus, the user (driver) of the vehicle 10 can experience sensations as if driving the virtual mobility.

The vehicle management system 100 may further include an HMI unit 150. The human-machine interface (HMI) relays information transmission between the user of the vehicle 10 and the vehicle management system 100. The HMI unit 150 includes at least an input device and an output device. Examples of the input device include a touch panel, a switch, a button, and a microphone. Examples of the output device include a display device, such as a display and an indicator, and the speaker 70. The user of the vehicle 10 can switch between on and off of generation and output of the pseudo-engine sound through the input device.

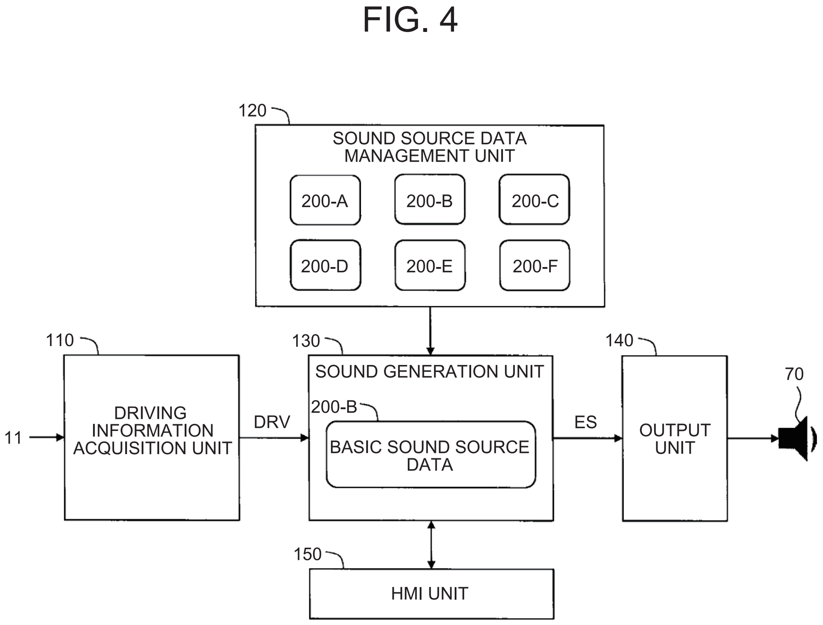

FIG. 4 is a block diagram showing another example of the functional configuration involved in generation and output of the simulated sound of the virtual mobility. In the example shown in FIG. 4, the sound source data management unit 120 stores and manages a plurality of types of basic sound source data 200 (200-A, 200-B, 200-C, ...) corresponding to a plurality of types of virtual mobilities (A, B, C, ...), respectively. In other words, the sound source data management unit 120 stores and manages the basic sound source data 200 for each virtual mobility. Each basic sound source data 200 is generated beforehand based on an engine model and a vehicle model of the corresponding virtual mobility.

The user of the vehicle 10 can designate a simulation target from among the multiple types of virtual mobilities. Specifically, the sound source data management unit 120 or the sound generation unit 130 presents the user with the multiple types of virtual mobilities through the HMI unit 150 (display device). The user designates one virtual mobility from among the multiple types of virtual mobilities using the HMI unit 150 (input device). The sound generation unit 130 acquires, from the sound source data management unit 120, one piece of basic sound source data 200 among the multiple types of basic sound source data 200 that corresponds to the virtual mobility designated by the user. Then, the sound generation unit 130 generates a pseudo-engine sound by using the acquired basic sound source data 200 (e.g.: the basic sound source data 200-B corresponding to the virtual mobility B). Thus, the driver of the vehicle 10 can experience sensations as if driving his or her favorite virtual mobility. The user of the vehicle 10 can also switch the pseudo-engine sound output from the speaker 70 by using the display device.

3. Transition to Simulation Mode Using Key

To provide the user of the vehicle 10 with stronger realistic sensations (sensations as if riding in a virtual mobility), the vehicle management system 100 in this embodiment may use a "key" for activating the vehicle 10. The user can activate the vehicle 10 using this key. For example, like a key of a conventional vehicle, inserting this key into a key hole provided in the vehicle 10 and turning the key can activate the vehicle 10. Hereinafter, this type of key that is used by being inserted into the key hole will be referred to as a "physical key 20." Other than being activated by the physical key 20, the vehicle 10 may be activated by means such as a push-type start switch that is currently mainstream. The physical key 20 may include a function of unlocking or locking the vehicle 10 using radio waves (a function of a so-called smart entry key).

The physical key 20 includes "virtual mobility information 40." The virtual mobility information 40 includes information needed to simulate the driving environment of the virtual mobility 30. The virtual mobility information 40 is, for example, information that identifies a vehicle type and an ID of the virtual mobility 30. Specific configurations of the vehicle 10 and the physical key 20 will be described later.

In the simulation mode, the vehicle management system 100 simulates the driving environment of the virtual mobility 30 in the vehicle 10 based on the virtual mobility information 40. When the vehicle management system 100 simulates the driving environment of the virtual mobility 30 in the vehicle 10, as a result, the vehicle 10 simulates the driving environment of the virtual mobility 30. Thus, "that the vehicle management system 100 simulates the driving environment of the virtual mobility 30 in the vehicle 10" and "that the vehicle 10 simulates the driving environment of the virtual mobility 30" are equivalent. In the following description, "simulating the driving environment of the virtual mobility 30" may be written simply as "simulating the virtual mobility 30." In the following description, the virtual mobility 30 to be simulated may be referred to as a "target virtual mobility."

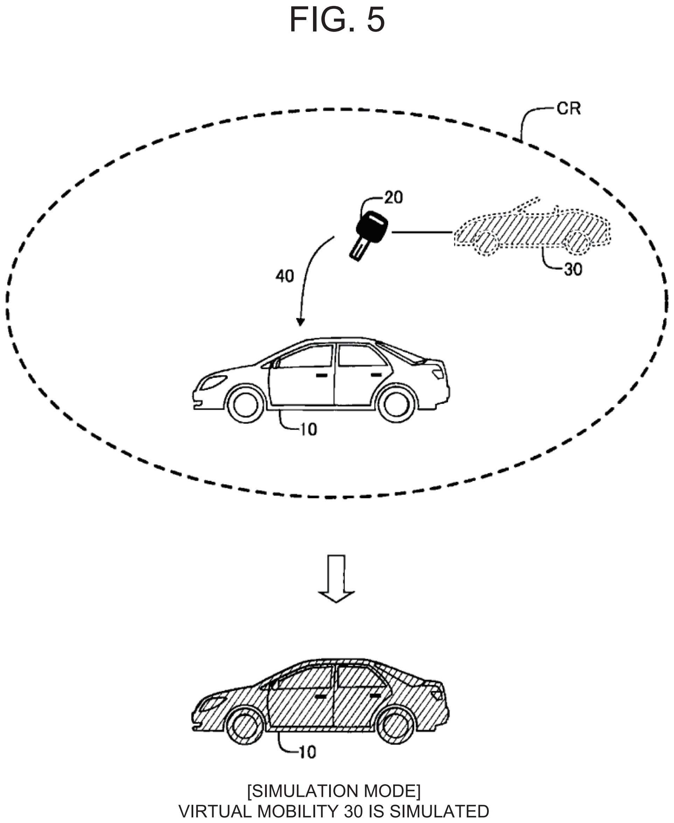

FIG. 5 is a schematic view showing how the simulation mode using the physical key is started. This drawing shows a situation where the user carrying the physical key 20 approaches the vehicle 10 to use the vehicle 10. The physical key 20 includes the virtual mobility information 40 that is information needed for the vehicle 10 to simulate the driving environment of the virtual mobility 30. The vehicle 10 acquires the virtual mobility information 40 by communicating with the physical key 20.

For example, the vehicle 10 can wirelessly communicate with the physical key 20 that is present within a communication range CR. The communication range CR is a range in which the vehicle 10 and the physical key 20 can wirelessly communicate with each other. In other words, the communication range CR is a range in which the vehicle 10 and the physical key 20 can establish wireless communication. The communication range CR is determined by a method of wireless communication between the vehicle 10 and the physical key 20, wireless communication performance of the vehicle 10, and wireless communication performance of the physical key 20. Examples of the method of wireless communication include near-field communication (NFC) and ultra-wideband (UWB). Typically, the communication range CR spreads to the outside of the vehicle 10.

The vehicle 10 acquires the virtual mobility information 40 through communication with the physical key 20. The vehicle management system 100 acquires the virtual mobility information 40 obtained through communication between the vehicle 10 and the physical key 20. The vehicle management system 100 may acquire the virtual mobility information 40 at a stage where the physical key 20 is present outside the vehicle 10. The vehicle management system 100 starts the simulation mode based on the virtual mobility information 40 obtained from the physical key 20. As the simulation mode starts, the vehicle 10 simulates the virtual mobility 30. That is, in the simulation mode, the vehicle 10 simulates the driving environment (the driving characteristics and the sounds) of the virtual mobility 30.

In the case where the vehicle management system 100 acquires the virtual mobility information 40 from the physical key 20 that is present outside the vehicle, calculations needed to start the simulation mode can be started early, so that the virtual mode starts smoothly. For example, it is also possible for the vehicle management system 100 to start the simulation mode based on the virtual mobility information 40 before the user having the physical key 20 gets in the vehicle 10. For example, it is also possible for the vehicle management system 100 to output a door opening-closing sound corresponding to the virtual mobility 30 through the speaker 70 when the user opens and closes the door to get in the vehicle 10. This allows the user to experience the door opening-closing sound of his or her favorite vehicle.

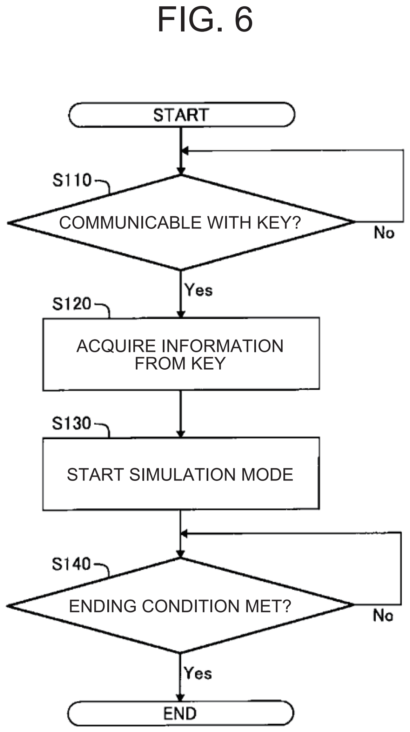

FIG. 6 is a flowchart relating to a process of starting the simulation mode using the physical key 20.

In step S110, the vehicle management system 100 determines whether the vehicle 10 and the physical key 20 can communicate with each other. Specifically, when the physical key 20 is present within the communication range CR, the two can communicate with each other. For example, when the vehicle 10 and the physical key 20 have established wireless communication, the vehicle management system 100 determines that the vehicle 10 and the physical key 20 can communicate with each other. When the vehicle 10 and the physical key 20 can communicate with each other (step S110: Yes), the process proceeds to step S120. When the vehicle 10 and the physical key 20 cannot communicate with each other (step S110: No), the process repeats step S110.

In step S120, the vehicle 10 acquires the virtual mobility information 40 needed to simulate the virtual mobility 30 from the physical key 20 through communication. The vehicle management system 100 acquires the virtual mobility information 40 that is thus obtained through communication between the vehicle 10 and the physical key 20. The process proceeds to step S130.

In step S130, the vehicle management system 100 starts the simulation mode. For example, the vehicle management system 100 acquires virtual mobility model data corresponding to the virtual mobility information 40 from an external management server, and starts the simulation mode using the virtual mobility model data. As another example, the virtual mobility information 40 may include the virtual mobility model data itself. Given restrictions on the amount of data, it is preferable that information transmitted from the physical key 20 be no more than the vehicle type, the ID, etc., while main model data needed to start the simulation mode is provided from an external server. Thereafter, the process proceeds to step S140.

In step S140, the vehicle management system 100 determines whether a simulation mode ending condition is met. The simulation mode ending condition is, for example, that a switch by which it is determined to enable or disable the simulation mode enters a disabling state. Such a switch may be a physical switch or may be operated on a touch panel. This switch function is realized by the HMI unit 150 that the user operates. When the simulation mode ending condition is met (step S140: Yes), the process ends. On the other hand, when the simulation mode ending condition is not met (step S140: No), the simulation mode is maintained. That is, the process repeats step S140 until the ending condition is met.

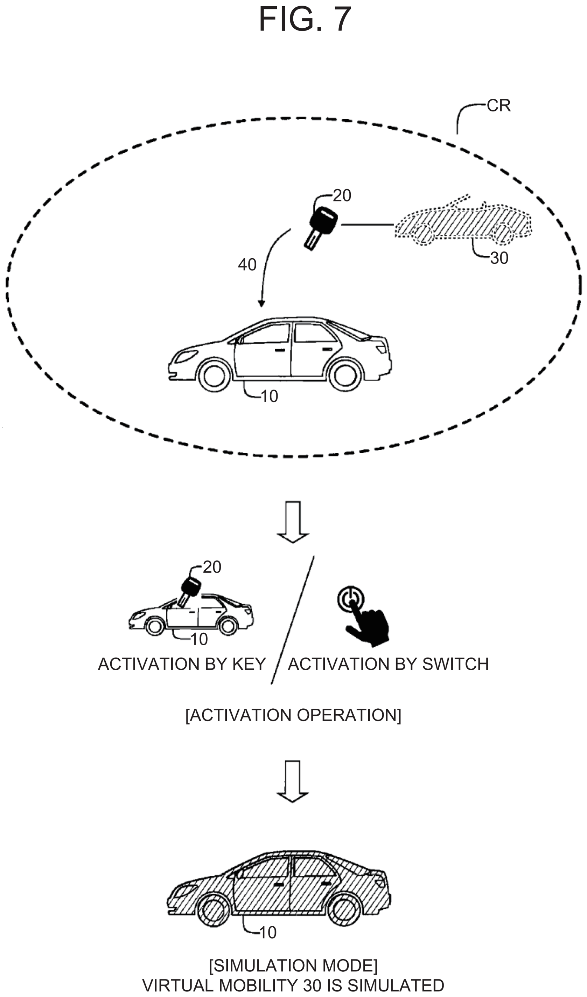

The vehicle management system 100 may start the simulation mode in conjunction with an activation operation of the vehicle 10. FIG. 7 is a schematic view showing a relationship between the activation operation of the vehicle 10 and the simulation mode. This drawing shows a situation where the user activates the vehicle 10 after the vehicle management system 100 acquires the virtual mobility information 40 from the physical key 20. This activation operation may be by the physical key 20 or may be an operation of a start switch. The vehicle management system 100 starts the simulation mode in conjunction with activation of the vehicle 10. The vehicle management system 100 may output a simulated activation sound that simulates an activation sound of the virtual mobility 30 through the speaker 70 in conjunction with start of the simulation mode. For example, when the virtual mobility 30 is an engine vehicle, the vehicle management system 100 outputs an engine start-up sound of the engine vehicle.

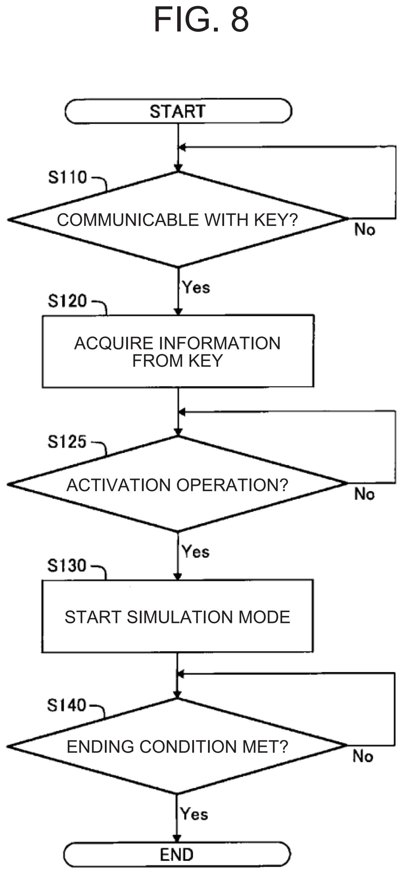

FIG. 8 is a flowchart of the case where the simulation mode is started in conjunction with the activation operation of the vehicle 10. The difference from the flowchart shown in FIG. 6 is that step S125 is inserted between step S120 and step S130. In step S125, the vehicle management system 100 determines whether an activation operation of the vehicle 10 has been performed. When it is determined that an activation operation of the vehicle 10 has been performed (step S125: Yes), the vehicle management system 100 proceeds to step S130. When it is determined that an activation operation of the vehicle 10 has not been performed (step S125: No), the vehicle management system 100 repeats step S125.

In the case where the simulation mode is started in conjunction with an activation operation of the vehicle 10, the user can experience stronger realistic sensations. In particular, in the case where an activation operation is performed by the physical key 20, the user can experience sensations as if activating the virtual mobility 30 itself by the key corresponding to the virtual mobility 30. In the case where a pseudo-activation sound of the virtual mobility 30 is output in conjunction with an activation operation by the physical key 20, the user can more intensely experience the realistic sensations of driving the virtual mobility 30.

Also in the example shown in FIG. 8, the virtual mobility information 40 has already been obtained at the stage of step S120. Therefore, the vehicle management system 100 may perform, before the activation operation (step S125), calculations needed to start the simulation mode beforehand based on the virtual mobility information 40. This enables smooth start of the simulation mode.

4. Designation Operation

4-1. Key Designation Operation and HMI Designation Operation

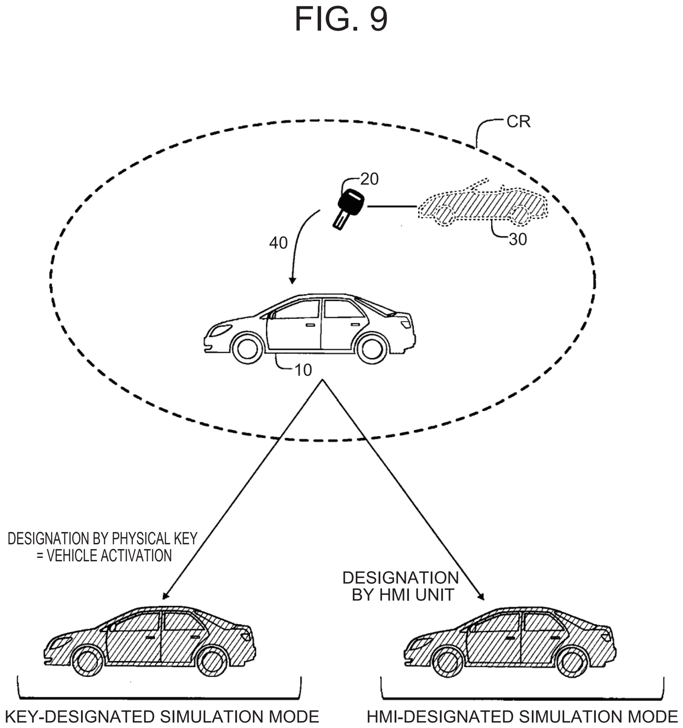

Hereinafter, the virtual mobility 30 to be simulated in the simulation mode will be referred to as the "target virtual mobility." The target virtual mobility may be designated by a "designation operation" performed by the user. FIG. 9 is a schematic view illustrating designation operations. The designation operations include a "key designation operation" that is an operation of activating the vehicle 10 by the physical key 20, and an "HMI designation operation" that is designation by operating the HMI unit 150 provided in the vehicle 10.

The key designation operation is an operation of designating the target virtual mobility based on the virtual mobility information 40 included in the physical key 20 that has been used to activate the vehicle 10. In this case, the virtual mobility 30 that is designated by the virtual mobility information 40 included in the physical key 20 that has been used to activate the vehicle 10 is the target virtual mobility. The key designation operation is at the same time an activation operation for activating the vehicle 10, and the simulation mode starts as the vehicle 10 is activated by the physical key 20. For example, a first physical key includes first virtual mobility information for simulating the driving environment of the first virtual mobility. When an activation operation using the first physical key is performed, the vehicle management system 100 sets the first virtual mobility as the target virtual mobility, and simulates the driving environment of the first virtual mobility based on the first virtual mobility information. The mode in which the target virtual mobility designated by the key designation operation is simulated will be referred to particularly as a "key-designated simulation mode."

The HMI designation operation is an operation of the user designating the target virtual mobility by operating the HMI unit 150. One example of the HMI designation operation is that the vehicle management system 100 displays a plurality of types of virtual mobilities on a touch panel (included in the HMI unit 150) and that the user designates the target virtual mobility from among them. The HMI designation operation may be executed by a user terminal (e.g.: a smartphone or a tablet) owned by the user. Alternatively, the HMI designation operation may be executed by voice input using a microphone. Further, the HMI designation operation may be executed by a physical switch provided in the vehicle 10. The physical switch may be one dedicated to the HMI designation operation, or may be implemented by operating an existing mechanism (a shift lever, a shift button, etc.) by a specific operation method. When the vehicle 10 includes an MT mode to be described later, the HMI designation operation may be executed by operating a device used for an operation in the MT mode (a lever, a paddle, a pedal, etc.). Thus, the HMI unit 150 may include an input device provided in the vehicle 10 or may include a user terminal of the user. The HMI designation operation is an operation that is input through the HMI unit 150. Since the HMI designation operation is an operation different from an activation operation for activating the vehicle 10, the vehicle 10 is not activated by the HMI designation operation. A mode in which a target virtual mobility designated by the HMI designation operation is simulated will be referred to particularly as an "HMI-designated simulation mode." When the target virtual mobility is the same, there is no difference in the driving environment to be simulated itself between the key-designated simulation mode and the HMI-designated simulation mode.

4-2. Plurality of Types of Virtual Mobilities

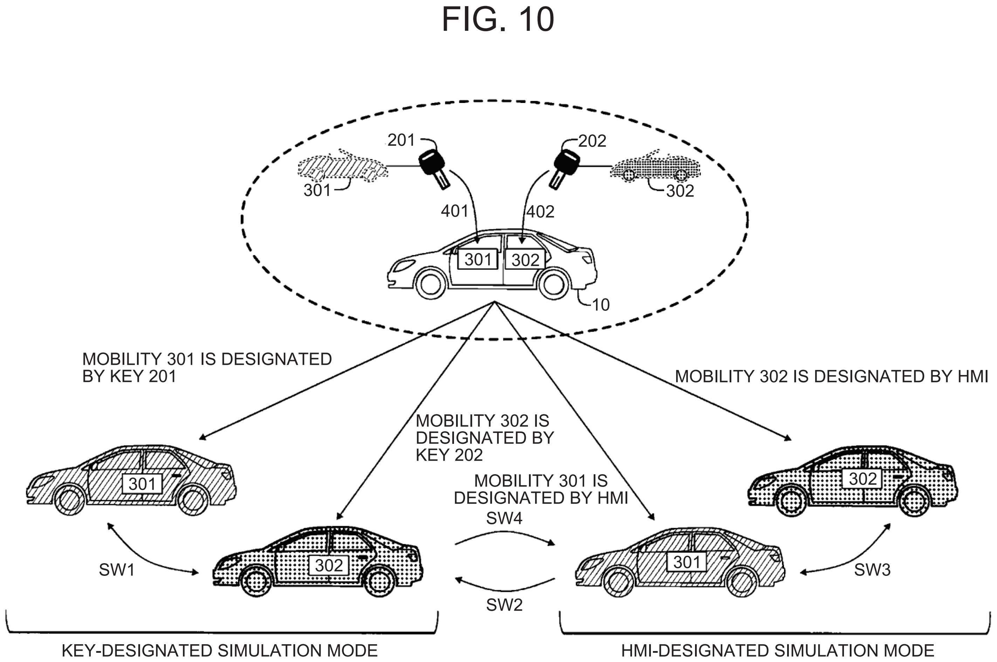

A situation will be considered where the vehicle management system 100 acquires the virtual mobility information 40 corresponding to a plurality of types of virtual mobilities 30. FIG. 10 is a schematic view showing a case where the user has a first physical key 201 and a second physical key 202. The first physical key 201 includes first virtual mobility information 401 that is information needed for the vehicle management system 100 to simulate the first virtual mobility 301. Similarly, the second physical key 202 includes second virtual mobility information 402 that is information needed for the vehicle management system 100 to simulate the second virtual mobility 302. In this case, the vehicle management system 100 acquires the first virtual mobility information 401 from the first physical key 201 and the second virtual mobility information 402 from the second physical key 202. In this state, the target virtual mobility to be simulated has not been identified, and therefore the vehicle management system 100 cannot start the simulation mode. Thus, in the case where the vehicle management system 100 acquires the virtual mobility information 40 corresponding to a plurality of types of virtual mobilities 30, the designation operation is effective for starting the simulation mode.

In the case of the example shown in FIG. 10, four patterns of the designation operation are conceivable:

(1) Designation of the first virtual mobility 301 by the first physical key 201
(2) Designation of the second virtual mobility 302 by the second physical key 202
(3) Designation of the first virtual mobility 301 by the HMI unit 150
(4) Designation of the second virtual mobility 302 by the HMI unit 150

It is also possible to switch the target virtual mobility by the designation operation. Switching of the target virtual mobility is performed as follows.

An operation of switching the target virtual mobility designated by the key designation operation to another target virtual mobility using the physical key 20 is performed by replacing the physical key 20 (corresponding to arrow SW1 in FIG. 10). For example, suppose that the vehicle management system 100 is currently simulating the first virtual mobility 301 as a result of the key designation operation using the first physical key 201. In this case, the target virtual mobility can be switched from the first virtual mobility 301 to the second virtual mobility 302 by temporarily removing the first physical key 201 from the key hole and inserting the second physical key 202 into the key hole (inserting and turning the key). A reverse operation should be performed when switching the target virtual mobility from the second virtual mobility 302 to the first virtual mobility 301. In other words, the target virtual mobility can be switched by performing an activation operation of the vehicle 10 using the physical key 20 including different virtual mobility information 40. As removing and inserting the physical key 20 involves activating and stopping the vehicle 10, timings when this key replacing operation is possible are limited. For example, the vehicle 10 is designed such that the key replacing operation is possible when the vehicle 10 is stationary and in a parking range. The above description also applies to a case where the target virtual mobility designated by the HMI designation operation is switched using the physical key 20 (corresponding to arrow SW2 in FIG. 10).

An operation of switching the target virtual mobility designated by the HMI designation operation to another target virtual mobility by the HMI designation operation is performed through the HMI unit 150 (corresponding to arrow SW3 in FIG. 10). For example, suppose that the first virtual mobility 301 is currently designated as the target virtual mobility as a result of the HMI designation operation. In this case, the target virtual mobility can be switched from the first virtual mobility 301 to the second virtual mobility 302 by selecting the second virtual mobility 302 by the HMI designation operation. A reverse operation should be performed when switching the target virtual mobility from the second virtual mobility 302 to the first virtual mobility 301. In other words, the target virtual mobility can be switched by designating a different virtual mobility by the HMI designation operation. As the HMI designation operation does not involve activating or stopping the vehicle 10, the timings of switching are not particularly limited. For example, the user can switch the target virtual mobility at an arbitrary timing by operating a touch screen, inputting a voice, or operating a physical switch. The above description also applies to a case where the target virtual mobility designated by the key designation operation is switched using the HMI unit 150 (corresponding to arrow SW4 in FIG. 10).

By way of generalization, N physical keys 201 to 20N are used. Here, N is an integer not smaller than 1. An $i$-th physical key 20$i$ ($i$ = 1 to N) includes $i$-th virtual mobility information that is information for designating an $i$-th virtual mobility. The designation operation refers to an operation of designating the $i$-th virtual mobility as the target virtual mobility. The key designation operation that is one aspect of the designation operation is an operation of activating the vehicle 10 using the i-th physical key 20i. The HMI designation operation that is another aspect of the designation operation is an operation of designating the i-th virtual mobility as the target virtual mobility through an input device provided in the vehicle 10 or a user terminal owned by the user of the vehicle 10.

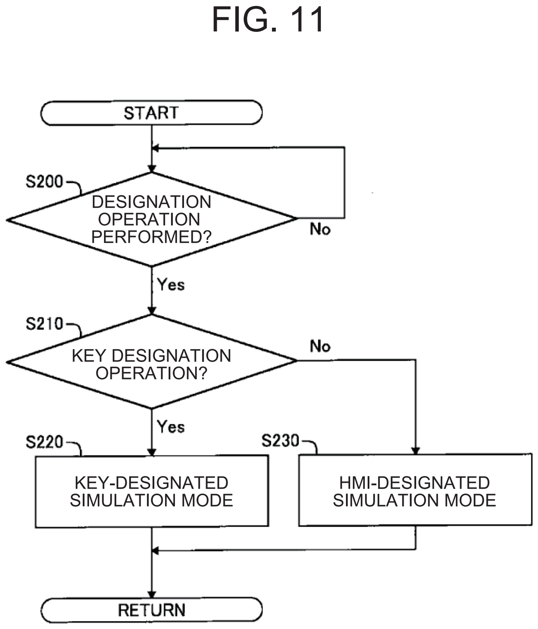

FIG. 11 is a flowchart showing a process of switching the target virtual mobility.

In step S200, the vehicle management system 100 determines whether the designation operation has been performed. When the designation operation has been performed (step S200: Yes), the process proceeds to step S210. When the designation operation has not been performed (step S200: No), the process repeats step S200.

In step S210, the vehicle management system 100 determines whether the designation operation determined in step S200 is the key designation operation. When the input designation operation is the key designation operation (step S210: Yes), the process proceeds to step S220. On the other hand, when the input designation operation is not the key designation operation (step S210: No), the process proceeds to step S230.

In step S220, the vehicle management system 100 starts the key-designated simulation mode. That is, the vehicle management system 100 starts the simulation mode by regarding the virtual mobility 30 corresponding to the physical key 20 that has been used for the key designation operation as the target virtual mobility. Thereafter, the process returns to the beginning.

In step S230, the vehicle management system 100 determines that the input designation operation is the HMI designation operation. Accordingly, in step S230, the vehicle management system 100 starts the HMI-designated simulation mode. That is, the vehicle management system 100 starts the simulation mode by regarding the virtual mobility 30 designated by the HMI designation operation as the target virtual mobility. Thereafter, the process returns to the beginning.

In this way, when the user owns a plurality of physical keys 20, the user can enjoy the simulation mode by designating the virtual mobility 30 included in each physical key 20 by the designation operation. It is also possible to switch the target virtual mobility by the designation operation. Thus, the user of the vehicle 10 can experience the driving environments of various virtual mobilities 30 corresponding to the types of the physical keys 20 the user owns.

The vehicle management system 100 may provide a notification that prompts the user to perform the designation operation. As an example, a case will be considered where the vehicle management system 100 acquires a plurality of types of virtual mobility information 40 as in FIG. 10. In this case, the vehicle management system 100 provides a notification that prompts designation of either the first virtual mobility 301 or the second virtual mobility 302 through the HMI unit 150 (the display or the speaker 70). Thus, even when the user has gotten into the vehicle 10 holding a plurality of physical keys 20, the user can select the target virtual mobility that suits his or her preference better.

4-3. When Designation Operation Has been Performed Multiple Times

When the designation operation has been performed multiple times, as a general rule, the vehicle management system 100 determines the target virtual mobility according to the latest designation operation. In other words, as a general rule, the latest designation operation is written over the designation operation that has been input before that. The switching operation shown in FIG. 10 shows an example in which the target virtual mobility is changed according to the latest designation operation.

As an exception, when the designation operation has been performed multiple times within a certain period (hereinafter referred to as a "first period"), the vehicle management system 100 may process these designation operations according to a preset priority rule. The first period is a period that can be arbitrarily set.

One example of the priority rule is to preferentially process an earlier designation operation. For example, a situation will be considered where the vehicle 10 has been activated by the physical key 20 and the activation sound of the target virtual mobility is being output. In this case, if the user accidentally performs the HMI designation operation and the target virtual mobility switches, the simulated activation sound switches while being output. This could result in causing a feeling of strangeness to the user, thereby contributing to spoiling the realistic sensations. Therefore, even when a further designation operation is performed by the HMI designation operation, the key designation operation by the physical key 20 that is an earlier designation operation is prioritized, which makes it less likely for the user of the vehicle 10 to develop a feeling of strangeness. Thus, it is desirable that the first period in this case be roughly equal to a duration time of the simulated activation sound (e.g.: a few seconds to ten seconds).

Another example of the priority rule is to process the key designation operation with priority over the HMI designation operation when both the key designation operation and the HMI designation operation are input during the first period. This special setting can highlight the realistic sensations that can be experienced by the operation of activating the vehicle 10 using the physical key 20.

5. Example of Configurations

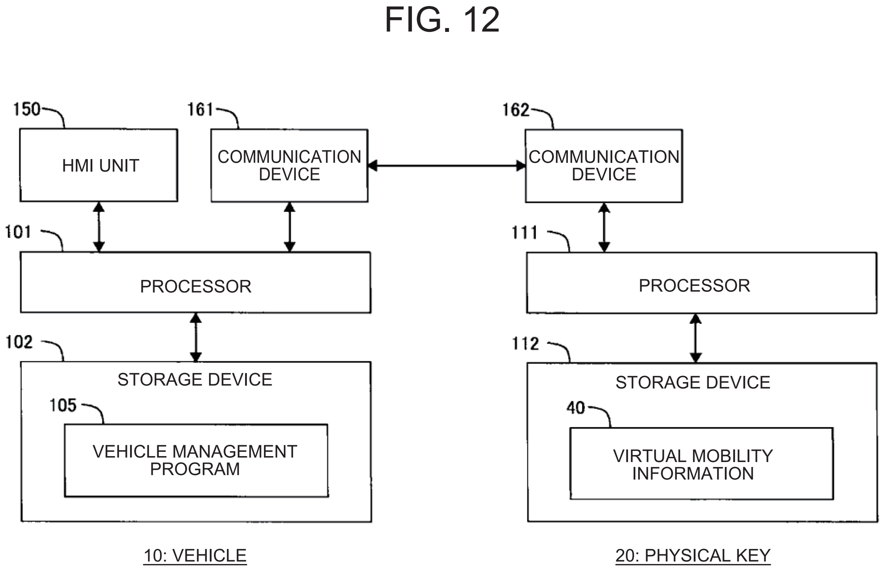

FIG. 12 is a block diagram showing an example of configurations of the vehicle 10 and the physical key 20. This drawing shows an example in which the entire vehicle management system 100 is installed in the vehicle 10. As mentioned in Section 1, part of the vehicle management system 100 may be included in a management server outside the vehicle 10. The management server can communicate with the vehicle 10, and can acquire various necessary information from the vehicle 10 and provide various information to the vehicle. The processor 101, the storage device 102, the vehicle management program 105, and the HMI unit 150 have already been described and therefore description thereof will be omitted here.

The physical key 20 includes one or more processors 111 (hereinafter referred to simply as a "processor 111") and one or more storage devices 112 (hereinafter referred to simply as a "storage device 112"). The processor 111 executes various processes. Examples of the processor 111 include a general-purpose processor, an application-specific processor, a central processing unit (CPU), a graphics processing unit (GPU), an application-specific integrated circuit (ASIC), a field-programmable gate array (FPGA), an integrated circuit, a conventional circuit, and/or combinations of these. The processor 111 can be referred to also as "circuitry" or "processing circuitry." The circuitry is hardware programmed to realize described functions or hardware that executes functions. The storage device 112 stores (retains) various information. Examples of the storage device 112 include a volatile memory, a non-volatile memory, a hard disk drive (HDD), and a solid-state drive (SSD).

The storage device 112 retains the virtual mobility information 40. The virtual mobility information 40 is information needed to simulate the virtual mobility. The virtual mobility information 40 is information for identifying the target virtual mobility, for example, the vehicle type or the ID of the virtual mobility. The virtual mobility information 40 may include virtual mobility model data.

The physical key 20 includes a communication device 162. The communication device 162 includes an antenna and a transmission-reception circuit for wireless communication. The communication device 162 transmits the virtual mobility information 40 retained in the storage device 112 to the vehicle 10. More specifically, the processor 111 establishes wireless communication with the vehicle 10 through the communication device 162. The processor 111 acquires the virtual mobility information 40 retained in the storage device 112. Then, the processor 111 transmits the virtual mobility information 40 acquired from the storage device 112 to the vehicle 10 through the communication device 162.

On the other hand, the vehicle 10 includes a communication device 161. The communication device 161 includes an antenna and a transmission-reception circuit for wireless communication. The communication device 161 receives the virtual mobility information 40 transmitted from the physical key 20. More specifically, the processor 101 of the vehicle 10 establishes wireless communication with the physical key 20 through the communication device 161. Then, the processor 101 acquires the virtual mobility information 40 transmitted from the physical key 20 through the communication device 161. Examples of the method of wireless communication between the vehicle 10 and the physical key 20 include near-field communication (NFC) and ultra-wideband (UWB).

The processor 101 of the vehicle 10 starts the simulation mode based on the acquired virtual mobility information 40. Typically, the virtual mobility model data (sound source data and driving characteristic data) corresponding to the vehicle type or the ID of the virtual mobility included in the virtual mobility information 40 is downloaded from an external management server. The processor 101 further starts the simulation mode based on the virtual mobility model data. The processor 101 may download the virtual mobility model data each time the simulation mode starts. Alternatively, the processor 101 may retain the model data that has been once downloaded in the storage device 102 of the vehicle 10 and use this data without downloading again when simulating the same virtual mobility 30 again.

## 6. Modified Examples

In the foregoing description, the key (physical key 20) that can activate the vehicle 10 transmits the virtual mobility information 40 to the vehicle 10. As a modified example, the virtual mobility information 40 may be transmitted to the vehicle 10 by a "medium" that does not have a key shape. This "medium" does not have such a shape as to be inserted into the key hole like the physical key 20 but has at least the storage device 112 and the communication device 162 similar to those of the physical key 20. That is, the virtual mobility information 40 is retained in the storage device 112 of the medium, and the communication device 162 transmits the virtual mobility information 40 to the vehicle 10. One example of such a medium is a minicar having the shape of the virtual mobility 30. As another example, the medium may be a user terminal (e.g.: a smartphone) of the user.

The vehicle 10 may communicate with a medium that is present outside the vehicle 10 and acquire the virtual mobility information 40 from the medium that is present outside the vehicle 10. In this case, the vehicle management system 100 can acquire the virtual mobility information 40 at a stage where the medium is present outside the vehicle 10. Therefore, before the user gets in the vehicle 10, the vehicle management system 100 can perform calculations needed to start the simulation mode beforehand based on the virtual mobility information 40. This enables smooth start of the simulation mode. Thus, even when a medium that does not have a key shape is used, the technical advantage that the simulation mode starts smoothly is achieved.

7. Application to Battery Electric Vehicle Including Manual Mode (MT Mode)

An electric motor used as a motive power device for traveling in a common battery electric vehicle differs significantly in the torque characteristic from an internal combustion engine that has been used as a motive power device for traveling in a conventional vehicle (CV). Because of the difference in the torque characteristic of the motive power device, battery electric vehicles generally do not include a transmission while a transmission is essential to CVs. Common battery electric vehicles naturally do not include a manual transmission (MT) that switches the gear ratio by the driver's manual operation. Accordingly, there is a great difference in driving sensations between driving of a conventional vehicle with an MT (hereinafter referred to as an "MT vehicle") and driving of a battery electric vehicle.

On the other hand, an electric motor can relatively easily control torque by controlling a voltage to be applied or a filed. Accordingly, with an electric motor, a desired torque characteristic can be obtained within the operation range of the electric motor by performing appropriate control. This characteristic can be utilized to simulate a torque characteristic specific to the MT vehicle through control of the torque of a battery electric vehicle. A pseudo-shifter can also be provided in the battery electric vehicle to allow the driver to experience driving sensations like those of the MT vehicle. These arrangements make it possible to simulate the MT vehicle in the battery electric vehicle.

That is, the battery electric vehicle controls an output of the electric motor so as to simulate a driving characteristic (torque characteristic) specific to the MT vehicle. The driver performs a pseudo-manual gear shifting operation by operating the pseudo-shifter. In response to the driver's pseudo-manual gear shifting operation, the battery electric vehicle simulates the MT vehicle and changes the driving characteristic (torque characteristic). Thus, the driver of the battery electric vehicle can experience sensations as if driving the MT vehicle. Hereinafter, a control mode of the electric motor for thus simulating the driving characteristic and the manual gear shifting operation of the MT vehicle will be referred to as a "manual mode" or an "MT mode."

In the following, a case will be considered where the vehicle 10 according to the present disclosure is a battery electric vehicle 10E including the MT mode. In the MT mode, the battery electric vehicle 10E may generate a pseudo-engine sound according to the driver's driving operation and output the pseudo-engine sound via the speaker 70. Since not only the driving operation of the MT vehicle but also the engine sound of the MT vehicle is reproduced, the degree of satisfaction of a driver who seeks reality is increased. In the following, examples of a configuration of the battery electric vehicle 10E including the MT mode will be described. Examples of the MT mode include a "sequential shift mode" and a "three-pedal mode."

7-1. First Example of Configuration (Sequential Shift Mode)

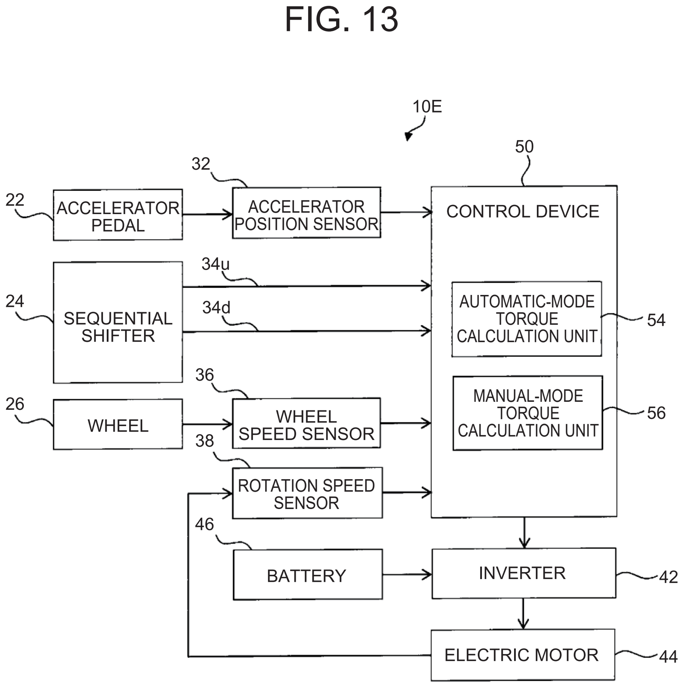

FIG. 13 is a block diagram showing a first example of a configuration of a motive power control system of the battery electric vehicle 10E according to the embodiment. The battery electric vehicle 10E includes an electric motor 44, a battery 46, and an inverter 42. The electric motor 44 is a motive power device for traveling. The battery 46 stores electric energy that drives the electric motor 44. Thus, the battery electric vehicle 10E is a battery electric vehicle (BEV) that travels on the electric energy stored in the battery 46. During acceleration, the inverter 42 converts direct-current electricity input from the battery 46 into drive electricity for the electric motor 44. During deceleration, the inverter 42 converts regenerative electricity input from the electric motor 44 into direct-current electricity and charges this electricity to the battery 46.

The battery electric vehicle 10E includes an accelerator pedal 22 for the driver to input an acceleration request to the battery electric vehicle 10E. The accelerator pedal 22 is provided with an accelerator position sensor 32 for detecting an accelerator operation amount.

The battery electric vehicle 10E includes a sequential shifter 24. The sequential shifter 24 may be a paddle-type shifter or may be a lever-type pseudo-shifter.

The paddle-type shifter is a dummy that is different from a real paddle-type shifter. The paddle-type shifter has a structure resembling a paddle-type shifter included in a clutch-pedal-less MT vehicle. The paddle-type shifter is attached to a steering wheel. The paddle-type shifter includes an upshift switch and a downshift switch that determine an operation position. The upshift switch issues an upshift signal 34u by being pulled toward the driver, and the downshift switch issues a downshift signal 34d by being pulled toward the driver.

On the other hand, the lever-type pseudo-shifter is, like the paddle-type shifter, a dummy that is different from a real shifter. The lever-type pseudo-shifter has a structure resembling a lever-type shifter included in a clutch-pedal-less MT vehicle. The lever-type pseudo-shifter is configured to output the upshift signal 34u as the shift lever is moved down frontward, and to output the downshift signal 34d as the shift lever is moved down rearward.

A wheel speed sensor 36 is provided on a wheel 26 of the battery electric vehicle 10E. The wheel speed sensor 36 is used as a vehicle speed sensor for detecting the vehicle speed of the battery electric vehicle 10E. A rotation speed sensor 38 for detecting the rotation speed of the electric motor 44 is provided on the electric motor 44.

The battery electric vehicle 10E includes a control device 50. The control device 50 is typically an electronic control unit (ECU) installed in the battery electric vehicle 10E. The control device 50 may be a combination of a plurality of ECUs. The control device 50 includes an interface, a memory, and a processor. An in-vehicle network is connected to the interface. The memory includes a RAM on which data is temporarily recorded, and a ROM in which processor-executable programs and various kinds of data relating to the programs are saved. The program is composed of a plurality of instructions. The processor retrieves a program and data from the memory and executes the program, and generates control signals based on signals acquired from sensors.

For example, the control device 50 controls the electric motor 44 through PWM control of the inverter 42. Signals from the accelerator position sensor 32, the sequential shifter 24 (the upshift switch and the downshift switch when the sequential shifter 24 is a paddle-type shifter), the wheel speed sensor 36, and the rotation speed sensor 38 are input into the control device 50. The control device 50 processes these signals and calculates a motor torque command value for performing the PWM control of the inverter 42.

The control device 50 includes an automatic mode (EV mode) and a manual mode (MT mode) as control modes. The automatic mode is a normal control mode for driving the battery electric vehicle 10E as a common battery electric vehicle. The automatic mode is programmed to continuously change the output of the electric motor 44 according to an operation of the accelerator pedal 22. On the other hand, the manual mode is a control mode for driving the battery electric vehicle 10E like the MT vehicle. The manual mode is programmed to change an output characteristic of the electric motor 44 in response to an operation of the accelerator pedal 22 according to an upshift operation and a downshift operation of the sequential shifter 24. The manual mode (MT mode) corresponds to the "sequential shift mode." It is possible to switch between the automatic mode and the manual mode.

The control device 50 includes an automatic-mode torque calculation unit 54 and a manual-mode torque calculation unit 56. Each of the units 54, 56 may be an independent ECU or may be an ECU function that is obtained as a program recorded on a memory is executed by a processor.

The automatic-mode torque calculation unit 54 includes a function of calculating motor torque in a case of controlling the electric motor 44 in the automatic mode. A motor torque command map is stored in the automatic-mode torque calculation unit 54. The motor torque command map is a map that determines motor torque from an accelerator operation amount and a rotation speed of the electric motor 44. A signal from the accelerator position sensor 32 and a signal from the rotation speed sensor 38 are respectively input into parameters of the motor torque command map. Motor torque corresponding to these signals is output from the motor torque command map. Accordingly, in the automatic mode, even when the driver operates the sequential shifter 24, this operation is not reflected in the motor torque.

The manual-mode torque calculation unit 56 includes an MT vehicle model. The MT vehicle model is a model for calculating drive wheel torque that is supposed to be obtained by an operation of the accelerator pedal 22 and the sequential shifter 24 based on an assumption that the battery electric vehicle 10E is an MT vehicle.

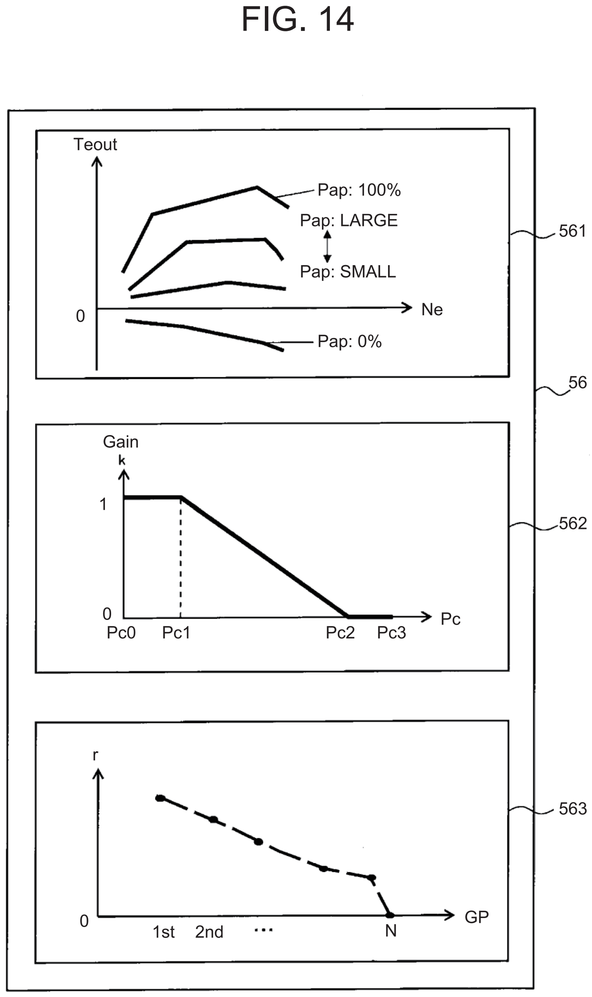

The MT vehicle model included in the manual-mode torque calculation unit 56 will be described with reference to FIG. 14. As shown in FIG. 14, the MT vehicle model includes an engine model 561, a clutch model 562, and a transmission model 563. An engine, a clutch, and a transmission that are virtually realized by the MT vehicle model are referred to as a "virtual engine," a "virtual clutch," and a "virtual transmission," respectively. In the engine model 561, the virtual engine is modeled. In the clutch model 562, the virtual clutch is modeled. In the transmission model 563, the virtual transmission is modeled.

The engine model 561 calculates the virtual engine rotation speed Ne and virtual engine output torque Teout. The virtual engine rotation speed Ne is calculated based on a wheel rotation speed Nw, a total reduction ratio R, and a slip ratio Rslip of the virtual clutch. For example, the virtual engine rotation speed Ne is represented by the following Expression (1):

$$\text{Expression (1): } Ne = Nw \times R/(1 - Rslip)$$

The virtual engine output torque Teout is calculated from the virtual engine rotation speed Ne and an accelerator operation amount Pap. As shown in FIG. 14, for the calculation of the virtual engine output torque Teout, a map specifying relationships among the accelerator operation amount Pap, the virtual engine rotation speed Ne, and the virtual engine output torque Teout is used. The map gives, for each accelerator operation amount Pap, the virtual engine output torque Teout corresponding to the virtual engine rotation speed Ne. The torque characteristic shown in FIG. 14 can also be set to a characteristic based on an assumption of a gasoline engine as well as to a characteristic based on an assumption of a diesel engine. The torque characteristic can also be set to a characteristic based on an assumption of a naturally aspirated engine as well as to a characteristic based on an assumption of a supercharged engine.

The clutch model 562 calculates a torque transmission gain k. The torque transmission gain k is a gain for calculating the degree of torque transmission of the virtual clutch according to a virtual clutch operation amount Pc. The virtual clutch operation amount Pc is normally 0%, and increases temporarily to 100% in conjunction with switching of the virtual gear stage of the virtual transmission. The clutch model 562 has a map as shown in FIG. 14. This map gives the torque transmission gain k corresponding to the virtual clutch operation amount Pc. In FIG. 14, Pc0 corresponds to a position at which the virtual clutch operation amount Pc is 0%, and Pc3 corresponds to a position at which the virtual clutch operation amount Pc is 100%. The range from Pc0 to Pc1 and the range from Pc2 to Pc3 are dead zones in which the torque transmission gain k does not change with the virtual clutch operation amount Pc. The clutch model 562 uses the torque transmission gain k to calculate clutch output torque Tcout. The clutch output torque Tcout is torque output from the virtual clutch. For example, the clutch output torque Tcout is given as the product of the virtual engine output torque Teout and the torque transmission gain k (Tcout = Teout $\times$ k).

The clutch model 562 calculates the slip ratio Rslip. The slip ratio Rslip is used in the calculation of the virtual engine rotation speed Ne in the engine model 561. In the calculation of the slip ratio Rslip, similarly to the torque transmission gain k, a map can be used that gives the slip ratio Rslip corresponding to the virtual clutch operation amount Pc.

The transmission model 563 calculates a gear ratio r. The gear ratio r is a gear ratio determined by a virtual gear stage GP in the virtual transmission. The virtual gear stage GP is upshifted by one stage in response to an upshift operation of the sequential shifter 24. On the other hand, the virtual gear stage GP is downshifted by one stage in response to a downshift operation of the sequential shifter 24. The transmission model 563 has a map as shown in FIG. 14. This map gives the gear ratio r corresponding to the virtual gear stage GP in such a manner that the higher the virtual gear stage GP is, the lower the gear ratio r is. The transmission model 563 uses the gear ratio r obtained from the map and the clutch output torque Tcout to calculate transmission output torque Tgout. For example, the transmission output torque Tgout is given as the product of the clutch output torque Tcout and the gear ratio r (Tgout = Tcout $\times$ r). The transmission output torque Tgout changes non-continuously in response to switching of the gear ratio r. Such a non-continuous change in the transmission output torque Tgout causes gearshift shock, which creates an ambience of a vehicle with a multistage transmission.

The MT vehicle model calculates drive wheel torque Tw using a predetermined reduction ratio rr. The reduction ratio rr is a fixed value determined by a mechanical structure from the virtual transmission to drive wheels. A value obtained by multiplying the reduction ratio rr by the gear ratio r is the total reduction ratio R. The MT vehicle model calculates the drive wheel torque Tw from the transmission output torque Tgout and the reduction ratio rr. For example, the drive wheel torque Tw is given as the product of the transmission output torque Tgout and the reduction ratio rr (Tw = Tgout x rr).

The control device 50 converts the drive wheel torque Tw calculated by the MT vehicle model into required motor torque Tm. The required motor torque Tm is motor torque needed to realize the drive wheel torque Tw calculated by the MT vehicle model. In the conversion of the drive wheel torque Tw into the required motor torque Tm, a reduction ratio from an output shaft of the electric motor 44 to the drive wheels is used. Then, the control device 50 controls the electric motor 44 by controlling the inverter 42 according to the required motor torque Tm.

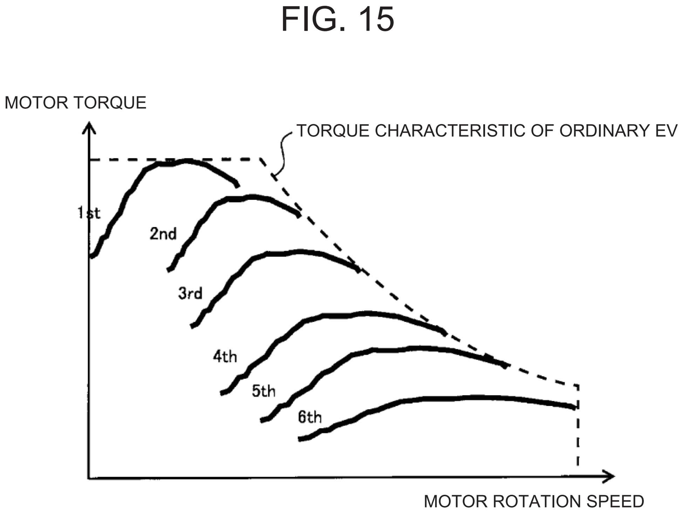

FIG. 15 is a view showing the torque characteristic of the electric motor 44 realized by motor control using the MT vehicle model as compared with the torque characteristic of the electric motor 44 realized by ordinary motor control in a battery electric vehicle (EV). According to the motor control using the MT vehicle model, as shown in FIG. 15, a torque characteristic that simulates the torque characteristic of the MT vehicle (the solid lines in the drawing) can be realized according to the virtual gear stage set by the sequential shifter 24. In FIG. 15, the number of gear stages is six.

7-2. Second Example of Configuration (Three-Pedal Mode)

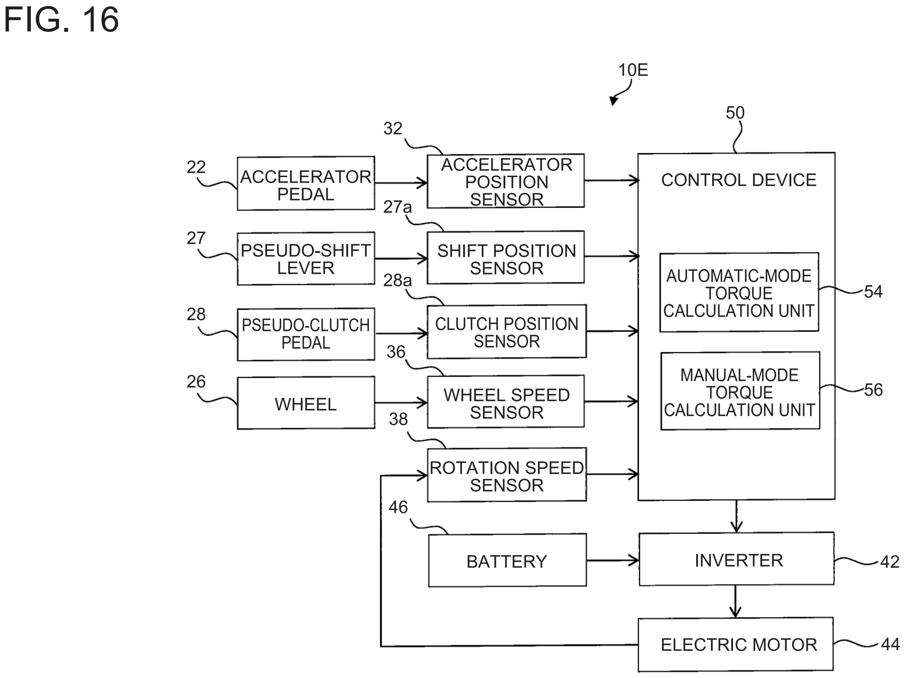

FIG. 16 is a block diagram showing a second example of the configuration of the motive power control system of the battery electric vehicle 10E according to the embodiment. Here, a description will be given only of components that are different from the above-described first example of the configuration. Specifically, in the second example of the configuration, the battery electric vehicle 10E includes a pseudo-shift lever (pseudo-shift device) 27 and a pseudo-clutch pedal 28 in place of the sequential shifter 24 included in the first example of the configuration. The pseudo-shift lever 27 and the pseudo-clutch pedal 28 are merely dummies that are different from real shift lever and clutch pedal.

The pseudo-shift lever 27 has a structure that simulates a shift lever provided in the MT vehicle. Arrangement and operational sensations of the pseudo-shift lever 27 are equivalent to those of the actual MT vehicle. In the pseudo-shift lever 27, for example, positions are provided that correspond to individual gear stages of first gear, second gear, third gear, fourth gear, fifth gear, sixth gear, reverse, and neutral. The pseudo-shift lever 27 is provided with a shift position sensor 27a that detects a gear stage by determining which position the pseudo-shift lever 27 is in.

The pseudo-clutch pedal 28 has a structure that simulates a clutch pedal provided in the MT vehicle. Arrangement and operational sensations of the pseudo-clutch pedal 28 are equivalent to those of the actual MT vehicle. The pseudo-clutch pedal 28 is operated when the pseudo-shift lever 27 is operated. That is, the driver depresses the pseudo-clutch pedal 28 when the driver wants to change gear stage settings by the pseudo-shift lever 27, and, when the change in the gear stage settings is finished, stops depressing the pseudo-clutch pedal 28 to bring it back to the original position. The pseudo-clutch pedal 28 is provided with a clutch position sensor 28a for detecting an amount of depression of the pseudo-clutch pedal 28.

Signals from the accelerator position sensor 32, the shift position sensor 27a, the clutch position sensor 28a, the wheel speed sensor 36, and the rotation speed sensor 38 are input into the control device 50. The control device 50 processes these signals and calculates a motor torque command value for performing the PWM control of the inverter 42.

As in the above-described first example of the configuration, the control device 50 includes an automatic mode and a manual mode as control modes. The automatic mode is programmed to continuously change the output of the electric motor 44 according to an operation of the accelerator pedal 22. On the other hand, the manual mode is a control mode for driving the battery electric vehicle 10E like the MT vehicle. The manual mode is programmed to change the output and the output characteristic of the electric motor 44 in response to an operation of the accelerator pedal 22 according to an operation of the pseudo-clutch pedal 28 and the pseudo-shift lever (pseudo-shift device) 27. The manual mode (MT mode) corresponds to the "three-pedal mode." It is possible to switch between the automatic mode and the manual mode.

The vehicle model included in the manual-mode torque calculation unit 56 is the same as the one shown in FIG. 14. However, the virtual clutch operation amount Pc is replaced with the amount of depression of the pseudo-clutch pedal 28 detected by the clutch position sensor 28a. The virtual gear stage GP is determined by a position of the pseudo-shift lever 27 detected by the shift position sensor 27a.

**Claims**

1. A battery electric vehicle (10) that is configured to use an electric motor (44) as a motive power device for traveling, the battery electric vehicle (10) comprising one or more processors (101) configured to:

   acquire information needed to simulate a driving environment of a target virtual mobility (30) from a medium that is present outside the battery electric vehicle (10); and
   simulate the driving environment of the target virtual mobility (30).

2. The battery electric vehicle (10) according to claim 1, wherein the one or more processors (101) are further configured to start the simulation of the driving environment of the target virtual mobility (30) while the medium is present outside the battery electric vehicle (10).

3. The battery electric vehicle (10) according to claim 1 or 2, wherein the medium is a key (20) for activating the battery electric vehicle (10).

4. The battery electric vehicle (10) according to claim 3, wherein the one or more processors (101) are further configured to, when the battery electric vehicle (10) is activated by the key (20), output a simulated activation sound that simulates an activation sound of the target virtual mobility (30).

5. The battery electric vehicle (10) according to claim 3, wherein the one or more processors (101) are further configured to, when a door of the battery electric vehicle (10) is opened and closed, output a sound that simulates a door opening-closing sound of the target virtual mobility (30).

6. The battery electric vehicle (10) according to claim 4, wherein:

   the target virtual mobility (30) is an engine vehicle; and
   the one or more processors (101) are configured to, when the battery electric vehicle (10) is activated by the key (20), output a sound that simulates a start-up sound of the engine vehicle.

# FIG. 1

100 ── VEHICLE MANAGEMENT SYSTEM

101 ──
PROCESSOR

102 ──
STORAGE DEVICE

105 ──
VEHICLE MANAGEMENT PROGRAM

10

70

11
SENSOR

44
ELECTRIC MOTOR

# FIG. 2

100

**VEHICLE MANAGEMENT SYSTEM**

<SIMULATION MODE>

SIMULATION OF VIRTUAL MOBILITY

(1) SIMULATION OF DRIVING CHARACTERISTICS

(2) SIMULATION OF SOUND
(GENERATION AND OUTPUT OF SIMULATED SOUND)

10

11

70

SENSOR

44

ELECTRIC MOTOR

# FIG. 3

EP 4 768 312 A1

# FIG. 4

**120** SOUND SOURCE DATA MANAGEMENT UNIT

200-A  200-B  200-C
200-D  200-E  200-F

**110** DRIVING INFORMATION ACQUISITION UNIT

11 →

DRV →

**130** SOUND GENERATION UNIT

**200-B** BASIC SOUND SOURCE DATA

ES →

**140** OUTPUT UNIT

70

**150** HMI UNIT

EP 4 768 312 A1

# FIG. 5

[SIMULATION MODE]
VIRTUAL MOBILITY 30 IS SIMULATED

# FIG. 6

```
                    ┌─────────────────┐
                    │      START      │
                    └─────────────────┘
                             │
                             ▼
S110 ──           ◇ COMMUNICABLE WITH KEY? ◇ ──── No
                             │ Yes
                             ▼
S120 ──           ┌─────────────────────────┐
                  │  ACQUIRE INFORMATION     │
                  │       FROM KEY           │
                  └─────────────────────────┘
                             │
                             ▼
S130 ──           ┌─────────────────────────┐
                  │   START SIMULATION MODE  │
                  └─────────────────────────┘
                             │
                             ▼
S140 ──           ◇ ENDING CONDITION MET? ◇ ──── No
                             │ Yes
                             ▼
                    ┌─────────────────┐
                    │       END       │
                    └─────────────────┘
```

# FIG. 7

CR

20

30

40

10

ACTIVATION BY KEY / ACTIVATION BY SWITCH

20

10

[ACTIVATION OPERATION]

[SIMULATION MODE]
VIRTUAL MOBILITY 30 IS SIMULATED

10

# FIG. 8

```
                    ┌─────────────────┐
                    │      START      │
                    └────────┬────────┘
                             │◄──────────────────────┐
                             ▼                        │
            S110 ╮       ◇                            │
                      ◇       ◇                       │
              ◇  COMMUNICABLE WITH KEY?  ◇────────────┘
                      ◇       ◇            No
                         ◇
                         │ Yes
                         ▼
            S120 ╮  ┌─────────────────┐
                    │ ACQUIRE INFORMATION │
                    │     FROM KEY        │
                    └────────┬────────┘
                             │◄──────────────────────┐
                             ▼                        │
            S125 ╮       ◇                            │
                      ◇       ◇                       │
              ◇  ACTIVATION OPERATION?  ◇─────────────┘
                      ◇       ◇            No
                         ◇
                         │ Yes
                         ▼
            S130 ╮  ┌─────────────────┐
                    │  START SIMULATION MODE │
                    └────────┬────────┘
                             │◄──────────────────────┐
                             ▼                        │
            S140 ╮       ◇                            │
                      ◇       ◇                       │
              ◇  ENDING CONDITION MET?  ◇─────────────┘
                      ◇       ◇            No
                         ◇
                         │ Yes
                         ▼
                    ┌─────────────────┐
                    │       END       │
                    └─────────────────┘
```

# FIG. 9

DESIGNATION BY PHYSICAL KEY
= VEHICLE ACTIVATION

DESIGNATION
BY HMI UNIT

KEY-DESIGNATED SIMULATION MODE

HMI-DESIGNATED SIMULATION MODE

# FIG. 10

MOBILITY 301 IS DESIGNATED BY KEY 201

MOBILITY 302 IS DESIGNATED BY HMI

MOBILITY 302 IS DESIGNATED BY KEY 202

MOBILITY 301 IS DESIGNATED BY HMI

SW4

SW1

SW2

SW3

KEY-DESIGNATED SIMULATION MODE

HMI-DESIGNATED SIMULATION MODE

# FIG. 11

```
                    ┌─────────────────┐
                    │      START      │
                    └────────┬────────┘
                             │            ◄──────────────┐
                             ▼                           │
            S200 ─┐      ╱───────────╲                   │
                  └─┐   ╱ DESIGNATION ╲                  │
                    ╲   ╲  OPERATION  ╱  No ─────────────┘
                      ╲  ╲ PERFORMED?╱
                        ╲───────────╱
                             │ Yes
                             ▼
            S210 ─┐      ╱───────────╲        No
                  └─┐   ╱     KEY     ╲ ────────────┐
                    ╲   ╲ DESIGNATION ╱             │
                      ╲  ╲ OPERATION?╱              │
                        ╲───────────╱               │
                             │ Yes                  │
                             ▼                      ▼
    S220 ─┐   ┌──────────────────┐   S230 ─┐   ┌──────────────────┐
          └─┐ │  KEY-DESIGNATED  │         └─┐ │  HMI-DESIGNATED  │
            └ │ SIMULATION MODE  │           └ │ SIMULATION MODE  │
              └────────┬─────────┘             └────────┬─────────┘
                       │                                │
                       │ ◄──────────────────────────────┘
                       ▼
              ┌─────────────────┐
              │     RETURN      │
              └─────────────────┘
```

# FIG. 12

# FIG. 13

# FIG. 14

# FIG. 15

MOTOR TORQUE

TORQUE CHARACTERISTIC OF ORDINARY EV

1st

2nd

3rd

4th

5th

6th

MOTOR ROTATION SPEED

## FIG. 16

EP 4 768 312 A1

Europäisches
Patentamt
European
Patent Office
Office européen
des brevets

## EUROPEAN SEARCH REPORT

**Application Number**

EP 25 22 6002

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/025860 A1 (RETRO EV OY [FI]) 6 February 2020 (2020-02-06) | 1,3-6 | INV. B60L15/20 B60W30/182 |
| A | * page 4, line 13 - line 31 * <br> * page 12, line 3 - line 11 * ----- | 2 | |
| X,P | US 2025/303879 A1 (PHILLIPS CHRISTOPHER [US] ET AL) 2 October 2025 (2025-10-02) | 1,3,4,6 | |
| A,P | * paragraph [0069] - paragraphs [0085], [0100]; figure 2 * ----- | 2,5 | |
| X | US 2021/053487 A1 (VANGELOV JOHN NAUM [US] ET AL) 25 February 2021 (2021-02-25) | 1,2 | |
| A | * paragraph [0004] - paragraph [0011] * <br> * paragraph [0015] - paragraph [0025]; figure 1 * <br> * paragraph [0052] - paragraph [0054] * ----- | 3-6 | |

**TECHNICAL FIELDS SEARCHED (IPC)**

B60W
B60L

The present search report has been drawn up for all claims

| Place of search | Date of completion of the search | Examiner |
|---|---|---|
| The Hague | 13 May 2026 | Akbudak, Tarik |

EPO FORM 1503 03.82 (P04C01)

## ANNEX TO THE EUROPEAN SEARCH REPORT
## ON EUROPEAN PATENT APPLICATION NO.

EP 25 22 6002

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2026

| Patent document cited in search report | Publication date | Patent family member(s) | Publication date |
|---|---|---|---|
| WO 2020025860 A1 | 06-02-2020 | NONE | |
| US 2025303879 A1 | 02-10-2025 | NONE | |
| US 2021053487 A1 | 25-02-2021 | CN 112406847 A | 26-02-2021 |
| | | DE 102020121794 A1 | 25-02-2021 |
| | | US 2021053487 A1 | 25-02-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7424464 B